(19) Europäisches Patentamt
European Patent Office
Office européen des brevets

(11) **EP 0 667 953 B1**

(12) **EUROPÄISCHE PATENTSCHRIFT**

(45) Veröffentlichungstag und Bekanntmachung des Hinweises auf die Patenterteilung:
**17.11.1999 Patentblatt 1999/46**

(51) Int Cl.[6]: **G01M 15/00**

(86) Internationale Anmeldenummer:
**PCT/EP94/03005**

(21) Anmeldenummer: **94928325.3**

(22) Anmeldetag: **08.09.1994**

(87) Internationale Veröffentlichungsnummer:
**WO 95/07449 (16.03.1995 Gazette 1995/12)**

(54) **VERFAHREN ZUR BESTIMMUNG DES VERBRENNUNGSVERHÄLTNISSES EINES KOLBENVERBRENNUNGSMOTORS**

METHOD FOR DETERMINING THE COMBUSTION RATIO OF A RECIPROCATING-PISTON INTERNAL COMBUSTION ENGINE

PROCEDE DE DETERMINATION DU TAUX DE COMBUSTION D'UN MOTEUR A COMBUSTION INTERNE A PISTON

(84) Benannte Vertragsstaaten:
**DE FR GB IT**

(30) Priorität: **08.09.1993 DE 4330324**

(43) Veröffentlichungstag der Anmeldung:
**23.08.1995 Patentblatt 1995/34**

(73) Patentinhaber: **FEV Motorentechnik GmbH 52078 Aachen (DE)**

(72) Erfinder: **PISCHINGER, Martin D-52072 Aachen (DE)**

(74) Vertreter: **Langmaack, Jürgen, Dipl.-Ing. et al Patentanwälte Maxton . Maxton . Langmaack Postfach 51 08 06 50944 Köln (DE)**

(56) Entgegenhaltungen:
GB-A- 2 149 535    GB-A- 2 210 180
US-A- 4 788 854

- **PROCEEDINGS OF THE 1988 AMERICAN CONTROL CONFERENCE, Bd.3, 15. Juni 1988, ATLANTA (US) Seiten 2392 - 2400 R.A. FIORINI U.A. 'A/F ESTIMATION FROM INTERNAL COMBUSTION ENGINE CYLINDER PRESSURE USING FAST FOURIER TRANSFORM DESCRIPTORS'**
- **IEE PROCEEDINGS D. CONTROL THEORY & APPLICATIONS, Bd.136, Nr.2, März 1989, STEVENAGE GB Seiten 84 - 88 Y. HATA U.A. 'ENGINE CONTROL SYSTEM USING A CYLINDER PRESSURE SENSOR'**
- **PATENT ABSTRACTS OF JAPAN vol. 10, no. 216 (M-502) (2272) 29. Juli 1986 & JP,A,61 055 349 (NISSAN MOTOR CO LTD) 19. März 1986**

**Beschreibung**

Die Erfindung betrifft ein Verfahren zur Bestimmung des Verbrennungsluftverhältnisses λ eines Kolbenverbrennungsmotors, insbesondere eines Ottomotors.

Die derzeit eingesetzten Verfahren zur Bestimmung des Verbrennungsluftverhältnisses λ bei Kolbenverbrennungsmotoren beruhen auf einer Ermittlung der Luftmasse und der Kraftstoffmasse oder einer Auswertung der chemischen Zusammensetzung des Abgases. Diese Verfahren haben den Nachteil, daß eine exakte Bestimmung des Verbrennungsluftverhältnisses für Einzelarbeitsspiele, insbesondere bei höheren Motordrehzahlen, nicht erfolgen kann. Bei der Messung über eine sogenannte Magersonde ergibt sich das Problem der großen Temperaturabhängigkeit derartiger Sonden, die ohne eine aufwendige Temperaturkompensation zu Fehlmessungen führt. Darüber hinaus lassen sich mit Hilfe einer Lambda- oder Magersondenmessung letztlich nur gemittelte Werte erfassen, die für Regelungen und/oder Steuerungen des Kraftstoffzufuhrsystems eines Verbrennungsmotors noch ausreichen mögen. Mit Hilfe einer Lambda- oder Magersondenmessung ist es jedoch nicht möglich, genauere Aussagen über das arbeitsspezifische Verbrennungsluftverhältnis in Abhängigkeit vom Verbrennungsablauf zu machen, was insbesondere für die Optimierung von Gesamtaggregaten, d. h. Kolbenverbrennungskraftmaschinen einschließlich der für die Regelung und Steuerung erforderlichen Aggregate notwendig ist.

In US-A-4,788,854 ist ein Verfahren zur Bestimmung des Verbrennungsluftverhältnisses eines Kolbenbrennkraftmaschine beschrieben, bei dem, ausgehend von einer Messung des Zylinderinnendruckes, die Frischgasmenge mit der gesamten, während eines Arbeitsspieles verbrauchten Brennstoffmenge verglichen und danach das Verbrennungsluftverhältnis λ geschätzt wird. Die Umsetzung des Verfahrens führt jedoch zu einem zweideutigen Ergebnis, da keine Unterscheidung zwischen dem Betriebszustand "fett" oder "mager" vorgegeben ist.

Der Erfindung liegt nun die Aufgabe zugrunde, ein Verfahren zu schaffen, das die Ermittlung des Verbrennungsluftverhältnisses λ für Einzelarbeitsspiele ermöglicht.

Bei dem erfindungsgemäßen Verfahren wird entsprechend den Verfahrensschritten des Anspruchs 1 der Verlauf des Brennraumdrukkes in Abhängigkeit von der Kolbenstellung im Zylinder für wenigstens ein Arbeitsspiel gemessen und die den Verlauf des Brennraumdruckes wiedergebenden Meßsignale werden digitalisiert, die digitalisierten Meßsignale werden einer programmierten Auswerteeinheit eingegeben, in der durch einen iterativen Rechenablauf aus dem gemessenen Verlauf des Brennraumdruckes der Wert des Verbrennungsluftverhältnisses errechnet und das Rechenergebnis ausgegeben wird, wobei für die Auswertung in der Auswerteeinheit die Regel zugrunde liegt, daß die Energie vor der Verbrennung und die Energie nach oder gegen Ende der Verbrennung gleich, zumindest annähernd gleich ist. Hierbei erfolgt die Auswertung auf der Basis der Gleichung

$$u_{BrEnd} = \frac{1}{m} \cdot \left( U_{ZZP} - \int_{ZZP}^{BrEnd} p\ dV + \int_{ZZP}^{BrEnd} dQ_{iWand} + \int_{ZZP}^{BrEnd} h \cdot dm_{BlowBy} \right) \cdot \quad (1\text{-}1)$$

Diese Energieerhaltung wird für die Phase vom Zündzeitpunkt bis zum Ende der Verbrennung durch die vorstehend angegebene Gleichung 1,1 beschrieben, für die gilt

| $u_{BreEnd}$ | spezifische Energie beim Brennende | [J/kg] |
|---|---|---|
| $m$ | Gasmasse im Brennraum beim Brennende | [kg] |
| $U_{ZZP}$ | Energie beim Zündzeitpunkt | [J] |
| $p$ | Druck im Brennraum | [N/m$^2$] |
| $dV$ | Volumensänderung des Brennraumes | [m$^3$] |
| $dQ_{Wand}$ | Wandwärme | [J] |
| $h$ | spezifische Enthalpie des Gases | [J/kg] |
| $dm_{Blowby}$ | Leckagemasse, die am Kolben vorbeiströmt | [kg] |

Das erfindungsgemäße Verfahren erlaubt die Ermittlung des Verbrennungsluftverhältnisses λ unabhängig von der Drehzahl für einzelne Arbeitsspiele. Hierbei geht die Erfindung davon aus, daß durch die Verbrennung das chemische Energieniveau des Gasgemisches im Zylinder sinkt, wobei die Energie als Volumenänderungsarbeit und Wandwärme abgegeben wird. Zur Eliminierung der sich aus der Gleichung ergebenden Zweideutigkeiten wird zusätzlich als Unterscheidungsparameter "fett/mager" der Auswerteeinheit eingegeben.

Die praktische Erprobung hat gezeigt, daß hier als Voraussetzung angenommen werden kann, daß das Gemisch bis zum Öffnen des Auslaßventils vollständig verbrennt. Es kann ferner angenommen werden, daß das Gasgemisch am Verbrennungsende, bzw. zum Zeitpunkt, an dem das Auslaßventil öffnet, als homogenes Gemisch angenommen werden kann.

Da der Motor in seinen Abmessungen insbesondere hinsichtlich des Volumens bekannt ist, kann die Gasmasse durch eine Ladungswechselrechnung ermittelt werden. Da der Druck beim Verbrennungsende bzw. zum Zeitpunkt "Auslaß öffnet" als Meßwert vorliegt, läßt sich die spezifische innere Energie $u_{BrEnd}$ für diesen Zeitpunkt als eine Funktion des Verbrennungsluftverhältnisses ermitteln, was nachstehend noch näher erläutert werden wird.

Die innere Energie zum Zündzeitpunkt $U_{ZZP}$ ist nur schwach von λ abhängig. Zum Zündzeitpunkt liegt eine bekannte Mischung aus Frischgemisch und Restgas vor, wobei Masse und Druck wiederum bekannt sind, so daß sie als Funktion von λ ermittelt werden kann.

Die als Verlustfaktor berücksichtigten Größen

$$\int_{ZZP}^{BrEnd} dQ_{Wand} \quad und \quad \int_{ZZP}^{BrEnd} h \cdot dm_{BlowBy}$$

werden im wesentlichen durch Wandwärmeverluste gebildet, die aufgrund vorhandener Näherungsformeln eingesetzt werden können, und auch durch die sogenannte Leckagemasse (Blow by), deren Einfluß auf den Energiezustand jedoch so gering ist, daß dieser Anteil vernachlässigt werden kann.

Da nun $u_{BreEnd}$ einerseits und $U_{ZZP}$ andererseits jeweils funktionen des Verbrennungsluftverhältnisses λ sind, ist in der Auswerteeinheit die nachstehende Gleichung 1.2

$$\frac{1}{m} \cdot \left( U_{ZZP} - \int_{ZZP}^{BrEnd} p \, dV + \int_{ZZP}^{BrEnd} dQ_{Wand} + \int_{ZZP}^{BrEnd} h \cdot dm_{BlowBy} \right) - u_{BrEnd} = 0 \quad (1.2)$$

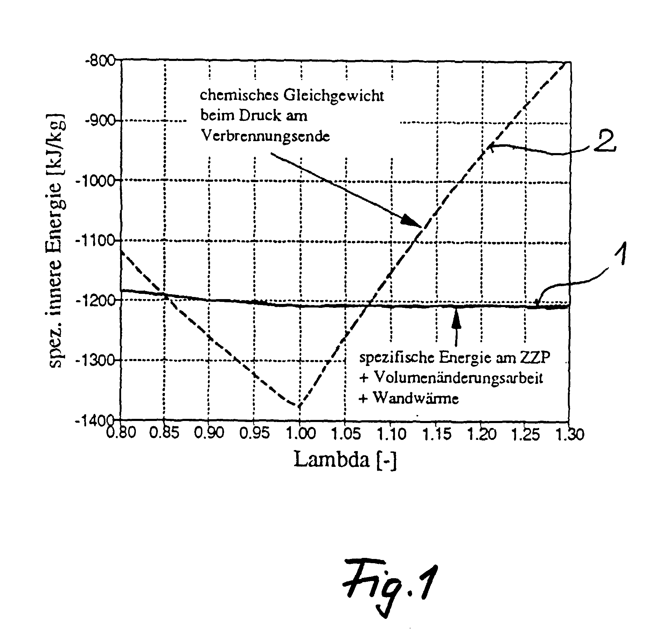

zu lösen. Dieses zu lösende Gleichungssystem ist in Fig. 1 dargestellt. Hierbei zeigt die Kurve 1 den rechten Teil der Gleichung 1.1, der nur schwach von λ abhängig ist. Die Kurve 2 zeigt hierbei den linken Teil der Gleichung 1.1, d. h. das chemische Gleichgewicht beim Druck am Verbrennungsende. Hieraus läßt sich ablesen, daß die beiden Schnittpunkte zwischen den Kurven 1 und 2 mögliche Lösungen der Gleichung 1.2 darstellen.

Da es unwahrscheinlich ist, daß die Lambdasondenmessung der exakten Wert erfaßt, ist die Auswerteeinheit so programmiert, daß sie sich selbst einen neuen λ -Wert vorgibt und den Rechengang jeweils unter neuer Vorgabe eines λ -Wertes solange wiederholt, bis das durch die Gleichung 1.1 bzw. die Gleichung 1.2 vorgegebene Ergebnis, d. h. die Schnittpunkte der Kurven 1 und 2 in Fig. 1 erreicht sind. Der λ -Wert, der dann zur Lösung der Gleichung geführt hat, wird dann zur Anzeige gebracht.

Die zwei Lösungen können auch mit Hilfe einer Brennfunktionsrechnung gefunden werden, wobei die Brennfunktion das Verhältnis der verbrannten Kraftstoffmasse zur gesamten eingesetzten Kraftstoffmasse angibt mit

$$X_{Bre} = \frac{m_{Br,verbrannt}}{m_{Br}} = 2.1$$

Da hier eine vollständige Verbrennung vorausgesetzt wird, muß die Brennfunktion am Ende der Verbrennung den Wert 1 erreichen. Der Endwert der Brennfunktion ist eine Funktion von λ . Die beiden Lösungen von λ können wiederum iterativ gefunden werden.

Wie Fig. 1 erkennen läßt, ergeben sich für einen Ottomotor sowohl für ein fettes Gemisch (λ < 1) als auch für das magere Gemisch (λ > 1) eine Lösung. Zur Auswahl der richtigen Lösung ist es zwar grundsätzlich möglich, eine zusätzliche Meßgröße vorzugeben, beispielsweise die Messung des λ -Wertes über eine Lambdasonde. Hierbei ist jedoch bei schnellen λ-Änderungen eine nicht unerhebliche Gefahr einer Fehlentscheidung möglich, da das Sonden-Ausgangssignal nicht exakt einem Arbeitsspiel zugeordnet werden kann.

Besonders zweckmäßig ist es jedoch, das Verfahren ohne zusätzliche Meßgrößen, wie beispielsweise Lambdasondensignale, durchzuführen, wobei der Unterscheidungsparameter fett/mager ebenfalls aus dem gemessenen Druckverlauf je Arbeitsspiel abgeleitet wird. Hierbei hat es sich als zweckmäßig herausgestellt, daß wenigstens ein aus dem Verlauf des Brennraumdruckes abgeleiteter Unterscheidungsparameter der Auswerteeinheit eingegeben wird. Als Unterscheidungsparameter kommen hier folgende, aus dem Verlauf des Brennraumdruckes ableitbare Parameter in Betracht: der Brennverzug, die Brenndauer sowie die Brenngeschwindigkeit und der indizierte Mitteldruck.

Der Brennverzug ist definiert als die Zeit zwischen der Zündung und dem ersten merklichen Druckanstieg durch die Verbrennung. Die Stelle dieses Druckanstieges läßt sich durch Berechnung und Auswertung einer Brennfunktion ermitteln. Da der Druckverlauf mit kleinen Störungen behaftet sein kann, können in der Brennfunktion kleine Schwingungen auftreten. Es empfiehlt sich daher, zur Ermittlung des Brennverzugs die Stelle zu wählen, an der ein Schwellwert überschritten wird, der größer als die Schwingung ist. Meistens wird der 2- oder 5-Prozentpunkt der Brennfunktion ausgesucht.

Die Brenndauer gibt die Zeit zwischen dem Zündzeitpunkt und dem Ende der Verbrennung an. Die Bestimmung des Verbrennungsendes kann analog zur Bestimmung des Verbrennungsbeginns erfolgen, d. h. es wird die Stelle ermittelt, an der ein Schwellwert der Brennfunktion überschritten wird (z. B. 95%, 98%). Es ist auch denkbar, den Punkt zu ermitteln, ab dem sich die Brennfunktion nicht mehr ändert oder ihren Maximalwert erreicht. Die effektive Brenndauer ist definiert als die Zeit zwischen dem Verbrennungsbeginn und dem Verbrennungsende.

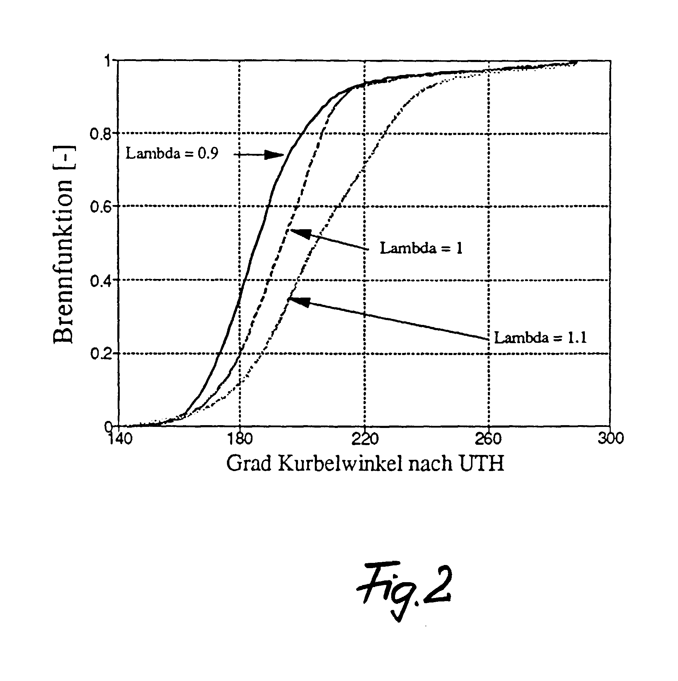

In Fig. 2 ist die typische Abhängigkeit des Brennfunktionsverlaufes vom Verbrennungsluftverhältnis gezeigt. Mit zunehmender Abmagerung vergrößern sich Brennverzug und effektive Brenndauer.

Die Brennschwindigkeit ist folgendermaßen definiert:

$$s_{Bre} = \frac{\dot{m}_2}{\rho_1 \cdot A_{Flamfr}}$$

mit:

$$\dot{m}_2 = \dot{x}_{Bre} \cdot m$$

| $m$ | Gesamtmasse | [kg] |
|---|---|---|
| $s_{Bre}$ | Brenngeschwindigkeit | [m/sec] |
| $\dot{x}_{Bre}$ | Ableitung der Brennfunkion nach der Zeit | [1/sec] |
| $\rho_1$ | Dichte der Zone 1 | [kg/m$^3$] |
| $A_{Flamfr}$ | Oberfläche der Flammenfront | [m$^2$] |
| $\dot{m}_2$ | Ableitung der Massen in Zone 2 nach der Zeit | [kg/sec] |

Zur Brechnung einer Kenngröße aus dem Brenngeschwindigkeitsverlauf wird die Gleichung 1.3 vorgeschlagen. Hierbei wird die Brenngeschwindigkeit mit dem Massenumsatz gewichtet, so daß der Einfluß der lokalen λ-Inhomogenität verkleinert wird.

$$\bar{s}_{Bre} = \frac{\sum [\dot{m}_2(\alpha) \cdot s_{Bre}(\alpha)]}{\sum \dot{m}_2(\alpha)} = \sum [dx_{Bre}(\alpha) \cdot s_{Bre}(\alpha)] \qquad (1.3)$$

Die Einheit dieser gewichteten Brenngeschwindigkeit ist (m/sec). Nach Bestimmung des Wertes $s_{Bre,stöch}$ bei stöchiometrischer Verbrennung von gemittelten Druckverläufen kann abgeschätzt werden, ob ein fetter oder magerer Zyklus vorliegt.

$$\bar{s}_{Bre} > \bar{s}_{Bre,stöch} \Rightarrow fett$$

$$\bar{s}_{Bre} < \bar{s}_{Bre,stöch} \Rightarrow mager$$

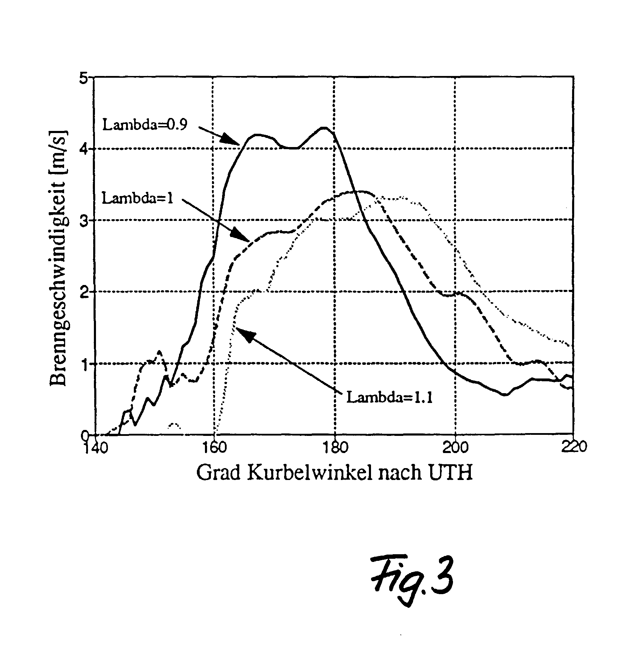

Bei einem Vergleich von Druckverläufen, die jeweils über 100 Arbeitsspiele gemittelt wurden und bei denen jeweils das mittlere Verbrennungsverhältnis variiert wurde, sieht man deutlich die bekannte Tendenz, daß fetterer Betrieb zu höheren Brenngeschwindigkeiten führt. Fig. 3 zeigt diesen Zusammenhang für einzelne typische Arbeitsspiele. Versuche, diese Aussage allgemein auf Einzelarbeitsspiele zu übertragen, führen häufig zu Widersprüchen.

Aufgrund dieser Widersprüche kann der aus dem Druckverlauf gewonnene Brenngeschwindigkeistverlauf nicht grundsätzlich als alleiniges Kriterium für die Fett-/Mager-Entscheidung bei Einzelzyklen benutzt werden.

Der indizierte Mitteldruck gibt die auf das Hubvolumen bezogene Volumenänderungsarbeit eines Arbeitszyklus an:

$$p_{mi} = \frac{\int\limits_{\alpha=0}^{360\,/\,i} p \; dV}{V_h}$$

$$\textit{Viertakter:} \qquad i = 0.5$$
$$\textit{Zweitakter:} \qquad i = 1$$

Die energetische Betrachtung zeigt, daß die über das Frischgemisch zur Verfügung gestellte Verbrennungsenergie ihr Maximum ziemlich genau beim stöchiometrischen Luftverhältnis aufweist. Trotzdem kann die Leistung eines Motors gesteigert werden, wenn das Gemisch angefettet wird, also mit $\lambda$ kleiner als 1 gefahren wird. Dieses Phänomen ist auf zwei Effekte zurückzuführen. Einerseits wird beim Ottomotor bewirkt, daß durch die größere Kraftstoffverdampfung des Frischgemisch stärker gekühlt wird und somit mehr Frischgemischmasse pro Arbeitsspiel in den Zylinder gelangt. Zweitens wird auch der Hochdruckprozeß beeinflußt, was sich durch eine Prozeßrechnung und Analyse erklären läßt. Vergleicht man den Brennfunktionsverlauf eines fetten Arbeitsspiels mit dem eines stöchiometrischen, so läßt sich erkennen, daß beim fetten Arbeitsspiel eine schnellere Verbrennung stattfindet. Zur Erklärung, wie sich eine kürzere Verbrennung auf die abgegebene Arbeit auswirken kann, sollen hier die Vergleichsprozesse betrachtet werden, Läßt man die Wandwärmeverluste außer acht, so entspricht eine schlagartige Verbrennung am oberen Totpunkt dem Gleichraumprozeß. Durch eine gesteuerte langsamere Verbrennung läßt sich z. B. eine Gleichdruckverbrennung realisieren. Eine zunehmend schnellere Verbrennung nähert sich folglich immer mehr dem Gleichraumprozeß an, der den thermodynamisch günstigsten Prozeß darstellt. Für eine adiabate Prozeßführung gilt, daß bei schnellerer Verbrennung und gleicher Energiezufuhr eine größere Arbeit gewonnen wird. Diese für den adiabaten Prozeß gemachten Erklärungen gelten sinngemäß auch für den Prozeß mit Wärmeübergang.

Zusammenfassend kann festgehalten werden, daß ein fetteres Arbeitsspiel im Mittel zu einer schnelleren Verbrennung und somit zu einem höheren indizierten Mitteldruck $p_{mi}$ führt. Dieser Effekt konnte durch die Messungen bestätigt werden. Bei Einzelarbeitsspielen machen sich jedoch die zyklischen Schwankungen anderer Einflußgrößen bemerkbar, so daß eine sichere Fett-/Mager-Entscheidung aufgrund von $p_{mi}$ erschwert wird.

Vorstehende Ausführungen zeigen, daß die angegebenen Kriterien zur Fett-/Mager-Entscheidung zwar zu richtigen Entscheidungen führen können, jedoch einzeln angewandt mit einer sehr hohen Fehlerquote behaftet sind. Es ist daher zweckmäßig, die Einzelkriterien miteinander zu verknüpfen, um ein zuverlässiges Gesamtkriterium zu erhalten.

Versieht man nun die Auswerteeinheit mit einer sogenannten Fuzzy-Logic, dann lassen sich die vorstehend erörterten Einzelkriterien, Brennverzug, Brenndauer, indizierter Mitteldruck und Brenngeschwindigkeit, als sogenannte Fuzzy-Variable benutzen. Durch die Verknüpfung der Fuzzy-Variablen kann die Fett-/Mager-Entscheidung getroffen werden, da die einzelnen Kriterien jeweils unterschiedlich durch die zyklischen Schwankungen anderer Einflußgrößen gestört werden, so daß das verknüpfte Kriterium sicher ist als die jeweiligen Einzelkriterien.

Die Bestimmung der spezifischen Energie $U_{ZZP}$ und $U_{BreEnd}$ ist grundsätzlich bekannt, wird jedoch nachstehend in einer zusammenfassenden Darstellung wiedergegeben, wie sie für die Programmierung der Auswerteeinheit verwendet werden kann. Hierbei zeigen die Gleichungen (5) und (31) jeweils die inneren Energie $u_{BreEnd}$ einerseits und $U_{ZZP}$ andererseits in Abhängigkeit von $\lambda$. Die Bestimmung kann jedoch auch zur Erzielung von Geschwindigkeitsvorteilen über Näherungsformeln erfolgen.

Das vorstehend beschriebene Meßverfahren zur Ableitung des Verbrennungsluftverhältnisses $\lambda$ aus dem gemessenen Verlauf des Brennraumdruckes ergibt die Möglichkeit der Ermittlung des Verbrennungsluftverhältnisses $\lambda$ für jeweils ein Einzelarbeitsspiel. Bei entsprechender Speicherung der Meßwerte mehrerer zeitlich aufeinanderfolgender Arbeitsspiele, wobei die Meßwerte von mehreren unmittelbar aufeinanderfolgenden Arbeitsspielen gemessen und gespeichert werden können, die dann jeweils nacheinander ausgewertet werden, ist es möglich, das Verbrennungsluftverhältnis $\lambda$ nicht nur für unterschiedliche stationäre Betriebszustände zu ermitteln, sondern auch dynamische Betriebszustände zu erfassen, beispielsweise auch bei Beschleunigungen oder Verzögerungen. Da bei Motorprüfständen, die bereits mit Indiziergeräten zur Messung des Druckverlaufes in Abhängigkeit von der Kolbenstellung ausgerüstet sind, kein zusätzlicher Aufwand an Meßtechnik erforderlich ist, stellt das erfindungsgemäße Verfahren eine gute Möglichkeit dar, bei einer vorgegebenen Motorkonstruktion die Einflüsse der peripheren Aggregate zu untersuchen, so beispielsweise die Einflüsse der einzelnen Komponenten der Gemischaufbereitung, wie beispielsweise Geometrie und/oder Temperaturlage im Ansaugkanal, Düsenanordnung, Düsenform, etc.. Da der ermittelte Wert des Verbrennungsluftverhältnisses einschließlich der Unterscheidungskriterien für die Auswerteeinheit aus dem Verlauf des Brennraumdruckes während eines Arbeitsspieles abgeleitet ist, besteht grundsätzlich die Möglichkeit, den ermittelten Wert des Verbrennungsluftverhältnisses auch als Stellsignal zur Steuerung oder Regelung im Bereich der Brennstoffzufuhr des Motors einzusetzen.

Für die Bestimmung der spezifischen Energie zum Zündzeitpunkt und am Brennende sind bei einem gegebenen $\lambda$-Wert und einer bekannten Kraftstoffzusammensetzung die nachstehenden Berechnungen durchzuführen, deren Ergebnis dann der Auswerteeinheit als Basis für den Rechenablauf gem. Gleichung 1.1 und 1.2 eingegeben werden, so daß dann, ausgehend von dem gemessenen Druckverlauf, die Messung bzw. Bestimmung des $\lambda$-Wertes für ein Arbeitsspiel erfolgen kann.

Neben dem Einsatz für Entwicklungsarbeiten am Motor läßt sich diese Art der Steuerung oder Regelung auch in Serienfahrzeugen einsetzen. So kann beispielsweise, anders als bei der konventionellen $\lambda$-Regelung, eine sehr schnelle Reaktion auf $\lambda$-Änderung insbesondere bei instationärem Betrieb erfolgen. Eine konventionelle $\lambda$-Regelung könnte hierdurch sogar gänzlich eingespart werden. Zur Erzielung einer möglichst hohen Katalysatorausnutzung werden die Einzelzyklen nicht unbedingt auf $\lambda = 1$ vorgesteuert; vielmehr wird die Vorgeschichte berücksichtigt und ein integraler Wert von $\lambda = 1$ angestrebt (Speichereffekt des Katalysators).

Eine weitere Verbesserung der $\lambda$-Werte von Einzelzyklen kann erzielt werden, wenn der tatsächliche $\lambda$-Wert eines Arbeitsspiels oder die Abweichung vom Vorsteuerwert in Abhängigkeit des jeweiligen Betriebszustandes (z. B. charakterisiert durch Drehzahl, Last und/oder dynamische Parameter) registriert wird (= abgespeichert wird). Bei erneutem Auftreten dieses Betriebszustandes kann dann der zugehörige registrierte Wert der $\lambda$-Abweichung bei der Vorsteuerung berücksichtigt werden. Durch dieses adaptive Verfahren läßt sich eine qualitativ hochwertige Vorsteuerung erzielen.

Nachfolgend wird eine Möglichkeit angegeben, wie die für die Auswertung erforderliche Bestimmung Energie beim Zündzeitpunkt und am Brennende ermittelt werden kann.

**Vorgehensweise zur Bestimmung der spezifischen Energie beim Zündzeitpunkt und am Brennende**

1. Bestimmung der Stoffzusammensetzung:

$$\sigma_i = \frac{n_i}{m} = f(\lambda) \tag{1}$$

2. Bestimmung der Gaskonstante:

$$R = \sum \sigma_i \cdot R_m \tag{2}$$

3. Bestimmung der Temperatur:

$$T = \frac{p \cdot V}{R \cdot m} \tag{3}$$

4. Bestimmung der spezifischen Energie:

$$u = \sum \sigma_i \cdot h^o_{m_i}(T) - R \cdot T$$

$h^o_{m_i}(T)$: *liegt als Tabelle für jede Stoffkomponente vor* $\tag{4}$

**1. Bestimmung der Stoffzusammensetzung**

Die Stoffzusammensetzung eines Gemisches wird durch die spezifischen Mengen $\sigma_i$ der einzelnen Komponenten *i* eindeutig beschrieben. Folgende Komponenten *i* werden berücksichtigt: $CO_2$, $CO$, $H_2O$, $O_2$, $N_2$, $H_2$ und *Brenn-*

*stoff*

## 1.1 Zusammensetzung des Gases am Brennende in Abhängigkeit von $\lambda$

Zur Bestimmung der Abgaszusammensetzung wird das Frischgemisch inklusive Brennstoff formal in die Komponenten $C$, $H_2$, $N_2$, $O_2$ und $H_2O$ aufgeteilt. Als Ausgangsstoffzusammensetzung für die Reaktion muß beim Dieselmotor zusätzlich der Brennstoff berücksichtigt werden. Es findet also keine Unterscheidung zwischen Diesel- und Ottomotor statt. Weil der Brennstoff formal in seine Komponenten aufgeteilt wurde, darf diese Ausgangsstoffzusammensetzung nicht verwendet werden, um Energien oder Enthalpien des Gemisches zu berechnen. Zur Unterscheidung zum Frischgemisch wird im folgenden der Index "*1*" anstatt "FG" verwendet. Die Verbrennungsprodukte erhalten den Index "2" und können zur Berechnung der Gemisch-Enthalpie und Energie benutzt werden. Die Masse bleibt bei der Verbrennung konstant, also ist $m_1$ gleich $m_2$. Die Blow-By-Verluste spielen für die Betrachtung der chemischen Zusammensetzung keine Rolle.

$$\frac{m_{FL}}{m_1} = \frac{1}{1 + \frac{1 - x_{H_2O}}{\lambda \cdot L_{ST}}} \tag{5}$$

$$\sigma_{1, H_2O} = \frac{m_{FL}}{m_1} \cdot \frac{x_{H_2O}}{M_{H_2O}} \tag{6}$$

$$\sigma_{1, N_2} = \frac{m_{FL}}{m_1} \cdot (1 - x_{H_2O}) \cdot \frac{0.7671}{M_{N_2}} \tag{7}$$

| | | |
|---|---|---|
| $c$ | Massenanteil des Kohlenstoffes im Kraftstoff | [ - ] |
| $h$ | Massenanteil des Wasserstoffes im Kraftstoff | [ - ] |
| o | Massenanteil des Sauerstoffes im Kraftstoff | [ - ] |
| $m_{FL}$ | Masse feuchter Luft | [kg] |
| $M_i$ | Molmasse der Komponente $i$ | [kg/kmol] |
| $x_{H2O}$ | Massenanteil des Wassers in der Luft | [-] |
| $L_{ST}$ | stöchiometrisches Verbrennungsluftverhältnis | [-] |
| $m_{Br}$ | Brennstoffmasse | [kg] |

$$\frac{m_{Br}}{m_1} = \frac{1 - x_{H_2O}}{\lambda \cdot L_{ST} + 1 - x_{H_2O}} \tag{8}$$

$$\sigma_{1, c} = \frac{m_{Br}}{m_1} \cdot \frac{c}{M_C} \tag{9}$$

$$\sigma_{1, H_2} = \frac{m_{Br}}{m_1} \cdot \frac{h}{M_{H_2}} \tag{10}$$

$$\sigma_{1, O_2} = \frac{m_{FL}}{m_1} \cdot (1 - x_{H_2O}) \cdot \frac{0.2329}{M_{O_2}} + \frac{m_{Br}}{m_1} \cdot \frac{o}{M_{Br}} \tag{11}$$

Bei Formel 7 und *11* werden die Massenanteile des Stickstoffes und des Sauerstoffs in der trockenen Luft mit $\xi_{N_2} = 0.7671$ und $\xi_{O_2} = 0.2329$ angenommen. Die Basisstoffbilanz sagt aus, daß die Anzahl der Moleküle eines Basisstoffes bei einer chemischen Reaktion konstant bleibt. Da die Masse ebenfalls konstant bleibt, müssen auch die spezifischen Mengen konstant bleiben. Es sich bewährt, zur Berechnung der Zusammensetzung folgende drei Fallunterscheidungen zu treffen:

### 1.1.a) Verbrennungsluftverhältnis $\lambda \geqslant 1$

Für diesen Fall wird vereinfachend angenommen, daß im Verbrennungsprodukt kein Kohlenmonoxid auftritt.

$$
\boxed{\begin{array}{c} C \\ H_2O \\ N_2 \\ O_2 \\ H_2 \end{array}} \quad \Longrightarrow \quad \boxed{\begin{array}{c} CO_2 \\ H_2O \\ N_2 \\ O_2 \end{array}}
$$
$$\qquad 1 \qquad\qquad\qquad\qquad 2$$

### Basisstoffbilanz

$$C: \sigma_{2,CO_2} = \sigma_{1,C} \qquad (12)$$

$$H: \sigma_{2,H_2O} = \sigma_{1,H_2O} + \sigma_{1,H_2} \qquad (13)$$

$$N: \sigma_{2,N_2} = \sigma_{1,N_2} \qquad (14)$$

$$O: \sigma_{2,O_2} = \sigma_{1,O_2} - \sigma_{1,C} - \tfrac{1}{2} \cdot \sigma_{1,H_2} \qquad (15)$$

### 1.1.b) Verbrennungsluftverhältnis $\lambda < 1$ und Brennstoff mit C-Anteil

$$
\boxed{\begin{array}{c} C \\ H_2O \\ N_2 \\ O_2 \\ H_2 \end{array}} \quad \Longrightarrow \quad \boxed{\begin{array}{c} CO_2 \\ H_2O \\ N_2 \\ H_2 \\ CO \end{array}}
$$
$$\qquad 1 \qquad\qquad\qquad\qquad 2$$

Für ein Frischgasgemisch mit C-haltigem Brennstoff und $\lambda < 1$ wird das Wassergasgleichgewicht angenommen, um neben den vier Gleichungen der Basisstoffbilanz eine weitere Gleichung für die fünfte Komponente des Abgases zu erhalten. Diese Gleichgewichtskonstante ist nur von der Temperatur des Gemisches abhängig.

$$K(T) = \frac{\sigma_{2,CO_2} \cdot \sigma_{2,H_2}}{\sigma_{2,CO} \cdot \sigma_{2,H_2O}} \qquad (16)$$

Für die Abgaszusammensetzung wird üblicherweise die Gleichgewichtskonstante bei 1750 K angesetzt. (Einfriertemperatur)

$$K(1750) = 0.2773$$

Die Lösung des Gleichungssystem führt auf die folgende Lösung für die spezifischen Mengen des Verbrannten:

$$\sigma_{2,H_2O} = S_1 - \sqrt{\left(S_1^2 - S_2\right)} \qquad (17)$$

mit:

$$S_1 = \frac{1}{2}\frac{1}{1-K}\left(\sigma_{1,H_2O} \cdot (2-K) + 2\sigma_{1,O_2} \cdot (1-K)\; \sigma_{1,H_2} + \sigma_{1,C} \cdot (2K-1)\right) \qquad (18)$$

und:

$$S_2 = \frac{1}{1-K} \cdot (\sigma_{1,H_2O} + \sigma_{1,H_2}) \cdot (\sigma_{1,H_2O} + 2\sigma_{1,O_2} - \sigma_{1,C}) \qquad (19)$$

$$\sigma_{2,N_2} = \sigma_{1,N_2} \qquad (20)$$

$$\sigma_{2,H_2} = \sigma_{1,H_2} - \sigma_{2,H_2O} + \sigma_{1,H_2O} \qquad (21)$$

$$\sigma_{2,CO_2} = 2\sigma_{1,O_2} - \sigma_{2,H_2O} - \sigma_{1,C} + \sigma_{1,H_2O} \qquad (22)$$

$$\sigma_{2,CO} = \sigma_{1,C} - \sigma_{2,CO_2} \qquad (23)$$

### 1.1.c) Brennstoff ohne C-Anteil

Dieser Fall findet z.B. bei reiner Wasserstoffverbrennung Anwendung.

$$\sigma_{2,N_2} = \sigma_{1,N_2} \tag{24}$$

Für $\lambda \geqslant 1$ gilt:

$$\sigma_{2,H_2O} = \sigma_{1,H_2O} + \sigma_{1,H_2} \tag{25}$$

$$\sigma_{2,O_2} = \sigma_{1,O_2} - \tfrac{1}{2} \cdot \sigma_{1,H_2} \tag{26}$$

$$\sigma_{2,H_2} = 0 \tag{27}$$

Für $\lambda < 1$ gilt:

$$\sigma_{2,H_2O} = \sigma_{1,O_2} + \sigma_{1,H_2O} \tag{28}$$

$$\sigma_{2,H_2} = \sigma_{1,H_2} - 2\sigma_{1,O_2} \tag{29}$$

$$\sigma_{2,O_2} = 0 \tag{30}$$

## 1.2 Zusammensetzung während der Kompression

Beim Dieselmotor besteht das Gemisch während der Kompressionsphase aus feuchter Luft und Restgas, wogegen das Gemisch des Ottomotors zusätzlich Kraftstoff enthält.

| | | |
|---|---|---|
| $m_{FL}$ | Masse feuchter Luft | [kg] |
| $m_{FG}$ | Masse Frischgemisch | [kg] |
| $\sigma_{FG,i}$ | spezifische Stoffmenge der Komponente i im Frischgemisch | [kmol/kg] |
| $M_i$ | Molmasse der Komponente $i$ | [kg/mol] |
| $x_{H2O}$ | Massenanteil des Wassers in der Luft | [-] |
| $L_{ST}$ | stöchiometrisches Verbrennungsluftverhältnis | [-] |

$$\text{Ottomotor:}\ \frac{m_{FL}}{m_{FG}} = \frac{1}{1+\dfrac{1-x_{H_2O}}{\lambda \cdot L_{ST}}}$$

$$Dieselmotor: \frac{m_{FL}}{m_{FG}} = 1 \qquad (31)$$

$$\sigma_{FG, H_2O} = \frac{m_{FL}}{m_{FG}} \cdot \frac{x_{H_2O}}{M_{H_2O}} \qquad (32)$$

$$\sigma_{FG, N_2} = \frac{m_{FL}}{m_{FG}} \cdot ( 1 + x_{H_2O} ) \cdot \frac{0.7671}{M_{N_2}} \qquad (33)$$

Bei Formel *33* und *34* werden die Massenanteile des Stickstoffes und des Sauerstoffs

$$\sigma_{FG, O_2} = \frac{m_{FL}}{m_{FG}} \cdot ( 1 + x_{H_2O} ) \cdot \frac{0.2329}{M_{O_2}} \qquad (34)$$

in der trockenen Luft mit $\xi_{N_2}$=0.7671 und $\xi_{O_2}$=0.2329 angenommen.

$$Ottomotor: \sigma_{FG, Br} = \frac{m_{FL}}{m_{FG}} \cdot \frac{1 - x_{H_2O}}{\lambda - L_{ST}} \cdot \frac{1}{M_{Br}}$$

$$Dieselmotor: \sigma_{FG, Br} = 0 \qquad (35)$$

Die übrigen spezifischen Stoffmengen $CO_2$, $H_2$ und $CO$ im Frischgemisch sind Null. Während der Kompressionsphase besteht das Gemisch aus Frischgemisch und Restgas. Die spezifischen Stoffmengen der Gemischkomponenten während der Kompressionsphase werden nach Formel 36 berechnet:

$$\sigma_{Kompr.,i} = \sigma_{FG,i} \cdot (1 - \xi_{RG}) + \sigma_{2,i} \cdot \xi_{RG} \qquad (36)$$

| $\xi_{RG}$ | Restgasmassenanteil während der Kompression | [-] |
|---|---|---|

**Patentansprüche**

1. Verfahren zur Bestimmung des Verbrennungsluftverhältnisses einer Kolbenbrennkraftmaschine, insbesondere eines Ottomotors, bei dem der Verlauf des Brennraumdruckes in Abhängigkeit von der Kolbenstellung im Zylinder für wenigstens ein Arbeitsspiel gemessen und die den Verlauf des Brennraumdruckes wiedergebenden Meßsignale digitalisiert werden und einer programmierten Auswerteeinheit eingegeben werden, in der durch einen iterativen Rechenablauf aus dem gemessenen Verlauf des Brennraumdrukkes der Wert des Verbrennungsluftverhältnisses errechnet und angezeigt wird, dadurch gekennzeichnet, daß für die Auswertung in der Auswerteeinheit die Regel zugrunde liegt, daß die Energie vor der Verbrennung und die Energie nach oder gegen Ende der Verbrennung gleich, zumindest annähernd gleich ist und zwar auf der Basis der Gleichung

$$u_{BrEnd} = \frac{1}{m} \cdot \left( U_{ZZP} - \int_{ZZP}^{BrEnd} p \, dV + \int_{ZZP}^{BrEnd} dQ_{Wand} + \int_{ZZP}^{BrEnd} h \cdot dm_{BlowBy} \right) \quad \cdot \cdot \quad (1\text{-}1)$$

erfolgt, mit den Termen

| $u_{BreEnd}$ | spezifische Energie beim Brennende | [J/kg] |
|---|---|---|
| $m$ | Gasmasse im Brennraum beim Brennende | [kg] |
| $U_{ZZP}$ | Energie beim Zündzeitpunkt | [J] |
| $p$ | Druck im Brennraum | [N/m$^2$] |
| $dV$ | Volumensänderung des Brennraumes | [m$^3$] |
| $dQ_{Wand}$ | Wandwärme | [J] |
| $h$ | spezifische Enthalpie des Gases | [J/kg] |
| $dm_{Blowby}$ | Leckagemasse, die am Kolben vorbeiströmt | [kg] |

und daß zur Eliminierung von Zweideutigkeiten als zusätzlicher Unterscheidungsparameter, "fett/mager" der Auswerteeinheit eingegeben wird.

2. Verfahren nach Anspruch 1, dadurch gekennzeichnet, daß als Unterscheidungsparameter für "fett/mager" wenigstes ein aus der Messung des Verlaufs des Brennraumdruckes abgeleiteter Unterscheidungsparameter der Auswerteeinheit eingegeben wird.

3. Verfahren nach einem der Ansprüche 1 oder 2, dadurch gekennzeichnet, daß der Verlauf des Brennraumdruckes mehrerer zeitlich aufeinanderfolgender Arbeitsspiele gemessen, gespeichert und dann nacheinander ausgewertet wird.

4. Verfahren nach einem der Ansprüche 1 bis 3, dadurch gekennzeichnet, daß der ermittelte Wert des Verbrennungsluftverhältnisses als Stellsignal zur Steuerung oder Regelung im Bereich der Brennstoffzufuhr des Motors verwendet wird.

5. Verfahren nach einem der Ansprüche 1 bis 4 dadurch gekennzeichnet, daß der ermittelte Wert des Verbrennungsluftverhältnisses bzw. die Abweichung von dessen Sollwert zusammen mit dem Betriebszustand des Motors abgespeichert, und bei erneutem Auftreten desselben Betriebszustandes der abgespeicherte Wert zur Korrekturzwecken bei der Vorsteuerung verwertet wird.

## Claims

1. Method of determining the combustion air ratio of a piston combustion engine, in particular of a petrol engine, in which the curve of the combustion chamber pressure is measured as a function of the piston position in the cylinder for at least one cycle and the measurement signals representing the curve of the combustion chamber pressure are digitised and are input into a programmed evaluation unit, in which by an iterative computing process consisting of the measured curve of the combustion chamber pressure the value of the combustion air ratio is calculated and indicated, characterised in that for evaluation in the evaluation unit there is a fundamental rule that the energy before combustion and the energy after or towards the end of combustion is at least approximately the same, in particular on the basis of the equation

$$u_{BrEnd} = \frac{1}{m} \cdot \left( U_{ZZP} - \int_{ZZP}^{BrEnd} p \; dV + \int_{ZZP}^{BrEnd} dQ_{Wand} + \int_{ZZP}^{BrEnd} h \cdot dm_{Blowby} \right) \;.. \; (1\text{-}1)$$

having the terms

| $u_{BreEnd}$ | specific energy at end of combustion | [J/kg] |
|---|---|---|
| $m$ | gas mass in the combustion chamber at combustion end | [kg] |
| $U_{zzp}$ | energy at moment of ignition | [J] |
| $p$ | pressure in combustion chamber | [N/m$^2$] |
| $dV$ | change in volume in the combustion chamber | [m3] |

(continued)

| $dQ_{Wand}$ | wall heat | [J] |
|---|---|---|
| $h$ | specific enthalpy of the gas | [J/kg] |
| $dm_{BlowBy}$ | leakage mass flowing past piston | [kg] |

and in that in order to eliminate ambiguities, as an additional differentiating parameter, "rich/weak" is input into the evaluation unit.

2. Method according to claim 1, characterised in that as a differentiating parameter for "rich/weak" at least one differentiating parameter derived from the measurement of the curve of the combustion chamber pressure is input into the evaluation unit.

3. Method according to one of claims 1 or 2, characterised in that the curve of the combustion chamber pressure of a plurality of consecutive cycles is measured, stored and then the results evaluated consecutively.

4. Method according to one of claims 1 to 3, characterised in that the determined value of the combustion air ratio is used as a setting signal for control in the region of the fuel supply of the engine.

5. Method according to one of claims 1 to 4, characterised in that the determined value of the combustion air ratio or deviation from its reference value is stored together with the operating state of the engine, and when the same operating state occurs again, the stored value is utilised for the purposes of correction in the case of pilot control.

## Revendications

1. Procédé de détermination du taux d'air de combustion d'un moteur à combustion interne à piston, notamment d'un moteur à allumage par étincelle, dans lequel on mesure l'évolution de la pression dans la chambre de combustion en fonction de la position du piston dans le cylindre pour au moins un cycle de fonctionnement et on numérise les signaux de mesures représentant l'évolution de la pression dans la chambre de combustion, on introduit les signaux de mesures numérisés dans un module de traitement programmé qui détermine par un processus de calcul itératif la valeur du taux d'air de combustion à partir de l'évolution mesurée de la pression dans la chambre de combustion et délivre le résultat du calcul, caractérisé en ce que l'évaluation par le module de traitement est basée sur la règle selon laquelle l'énergie avant combustion et l'énergie après ou en fin de combustion sont égales entre elles ou du moins à peu près égales, à savoir conformément à l'équation suivante :

$$u_{fcomb} = \frac{1}{m} \cdot \left( U_{pall} - \int_{pall}^{fcomb} p \ dV + \int_{pall}^{fcomb} dQ_{paroi} + \int_{pall}^{fcomb} h \cdot dm_{cont} \right) \quad (1.1)$$

avec pour termes :

| $u_{fcomb}$ | énergie spécifique en fin de combustion | [J/kg] |
|---|---|---|
| $m$ | masse de gaz dans la chambre en fin de combustion | [kg] |
| $U_{pall}$ | énergie au point d'allumage | [J] |
| $p$ | pression dans la chambre de combustion | [N/m$^2$] |
| $dV$ | variation de volume de la chambre de combustion | [m$^3$] |
| $dQ_{paroi}$ | chaleur de la paroi | [J] |
| $h$ | enthalpie spécifique du gaz | [J/kg] |
| $dm_{cont}$ | masse de gaz contournant le piston | [kg] |

et en ce que, pour éliminer des ambivalences, on introduit dans le module de traitement un paramètre de différentiation supplémentaire "riche/pauvre".

2. Procédé selon la revendication 1, caractérisé en ce que l'on introduit comme paramètre de différentiation "riche/pauvre" dans le module de traitement au moins un paramètre de différentiation dérivé de la mesure de l'évolution de la pression dans la chambre de combustion.

3. Procédé selon l'une des revendications 1 ou 2, caractérisé en ce que l'évolution de la pression dans la chambre de combustion de plusieurs cycles de fonctionnement consécutifs est mesurée, mémorisée et ensuite évaluée l'une après l'autre.

4. Procédé selon l'une des revendications 1 à 3, caractérisé en ce que la valeur déterminée pour le taux d'air de combustion est utilisée comme signal de réglage pour la commande ou la régulation au niveau de l'alimentation en carburant du moteur.

5. Procédé selon l'une des revendications 1 à 4, caractérisé en ce que l'on mémorise la valeur déterminée pour le taux d'air de combustion ou l'écart par rapport à sa valeur théorique en même temps que l'état de fonctionnement du moteur et, lorsque le même état de fonctionnement apparaît de nouveau, on utilise la valeur mémorisée à des fins de correction pour la commande pilote.

Fig.1

*Fig.2*

*Fig.3*